# EUROPEAN PATENT APPLICATION

(11) **EP 2 455 870 A1**
(43) Date of publication of application: **23.05.2012**
(21) Application number: 10191980.1
(22) Date of filing: 19.11.2010
(51) Int. Cl.: G06F 17/30, G06Q 10/00

(54) **Method, device and system for record storage in an automatically selected database**

(71) Applicant: Research In Motion Limited, Waterloo, ON N2L 3W8 (CA)
(72) Inventor: Jain, Rohit, Rocky, Waterloo Ontario N2L 5Z5 (CA)
(74) Representative: MERH-IP Matias Erny Reichl Hoffmann

(57) **Abstract**

Methods, devices, systems and for record storage in an automatically selected database are provided. In one aspect, a device is provided that has a calendar application and a plurality of record storage databases. The device is configured to examine characteristics of received electronic data representing details for calendar event records, and to automatically select one of said plurality of record storage databases based on a comparison of the characteristics with a set of criteria.

## Description

### FIELD

The present specification relates generally to computing devices and more specifically relates to a method, device and system for storage of data records in a database that is selected automatically.

### BACKGROUND

Electronic devices are increasingly used as information organizers. While such use was originally on the enterprise level, increasingly such use is also occurring at the personal level. The use of a single electronic device for both enterprise and personal uses is increasingly common. Furthermore, even on the enterprise level, there can be a number of enterprise functions. There are also an increasing number of applications that are available for information organization. At the same time, portable electronic device themselves still have reduced processing, memory, input and output resources at least in relation to their desktop and laptop counterparts.

### SUMMARY

An aspect of this specification provides a method for record storage in an automatically selected database comprising: receiving electronic data representing details for a calendar event record; parsing the calendar event record; loading a database selection criteria; comparing the parsed calendar event record with the database selection criteria; selecting a default data record store based on the comparing; and, storing the electronic data is the selected default data record store.

The method may further comprise modifying the default data record store to another data record store prior to the storing, and storing the electronic data in the another data record store.

The method may further comprise associating a designated time period with a designated one of the plurality of data record stores and wherein the criteria comprises mandating selection of the designated one of the plurality of data record stores as the default data record store according to a characteristic of the calendar event record.

The characteristic may comprise a time when the receiving electronic data occurs such that if the receiving occurs during the designated time period then the designated one of the plurality of data record stores is selected as the default data record store.

The characteristic may comprise a duration of time between a start time and an end time of the calendar event record such that if the duration overlaps with the designated time period then the designated one of the plurality of data record stores is selected as the default data record store.

The characteristic may comprise an indication if the time and an end time of the calendar event record such that if the duration overlaps with the designated time period then the designated one of the plurality of data record stores is selected as the default data record store.

The characteristic may comprise a predefined text string in the subject field or note field of the calendar event record such that if the predefined text string occurs in the subject field or the note field then the designated one of the plurality of data record stores is selected as the default data record store. The text string may be derived from a previously-stored calendar event record and the designated one of the plurality of data record stores corresponds to the data record store that maintains the previously-stored calendar event record.

The characteristic may comprise a predefined location associated with the location field of the calendar event record such that if the predefined location occurs in the location field then the designated one of the plurality of data record stores is selected as the default data record store.

The characteristic may comprise a predefined organizer associated with the organizer field of the calendar event record such that if the predefined organizer exists in the organizer field then the designated one of the plurality of data record stores is selected as the default data record store.

The characteristic may comprise a predefined invitee associated with the invitee field of the calendar event record such that if the predefined invitee exists in the invitee field then the designated one of the plurality of data record stores is selected as the default data record store.

The characteristic may comprise a predefined value associated with the private field of the calendar event record such that if the predefined value exists in the private field then the designated one of the plurality of data record stores is selected as the default data record store.

Another aspect of this specification provides a computer readable medium for storing a plurality of programming instructions executable on a processor in an electronic device; the programming instructions implementing a method according to any of the foregoing.

Another aspect of this specification provides an electronic device configured according to the foregoing methods.

### BRIEF DESCRIPTION OF THE DRAWINGS

Figure 1 is a schematic representation of a front view of a portable electronic device.

Figure 2 is a schematic representation of a rear view of a portable electronic device.

Figure 3 is a block diagram of the electronic components of the device shown in Figures 1 and 2.

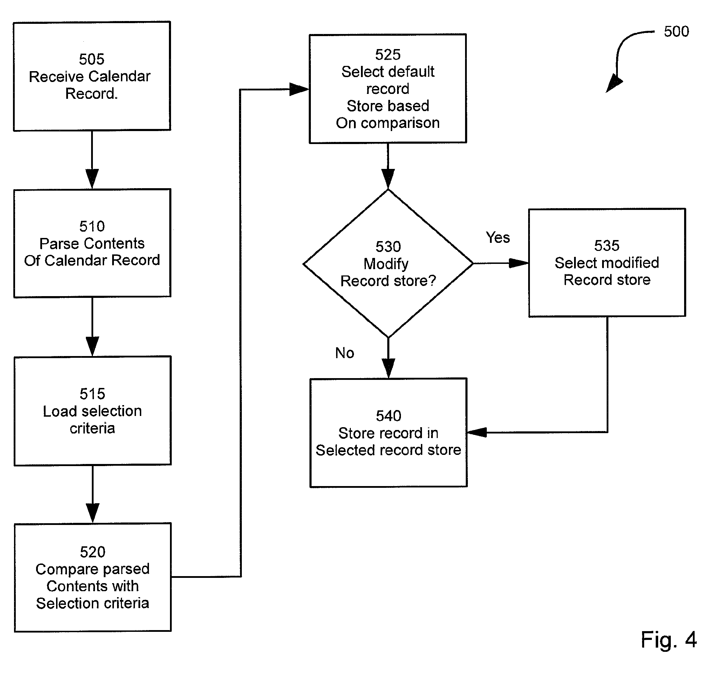

Figure 4 shows an example of a flow chart depicting a method for record storage in an automatically selected database.

Figure 5 shows the physical medium of Figure 4 and identifying certain elements thereon.

Figure 6 shows an example screen that can be generated by the calendar application.

Figure 7 shows an example screen that can be generated by the calendar application.

### DETAILED DESCRIPTION OF THE EMBODIMENTS

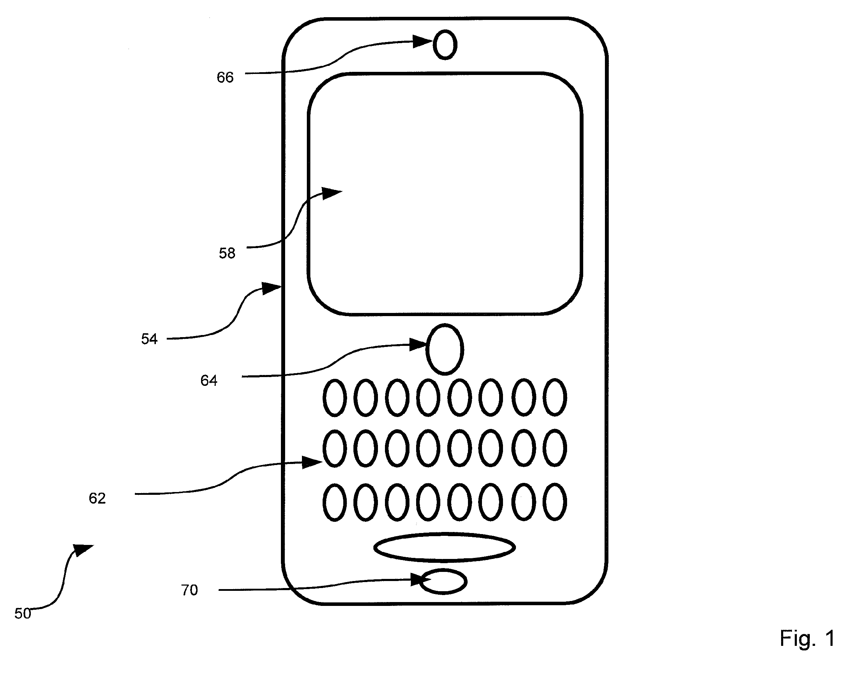

Referring now to Figure 1, shows a schematic representation of a non-limiting example of a portable electronic device 50 which can be used to manage information, as discussed in greater detail below. It is to be understood that portable electronic device 50 is an example, and it will be apparent to those skilled in the art that a variety of different portable electronic device structures are contemplated. Indeed variations on portable electronic device 50 can include, without limitation, a tablet computer, a cellular telephone and a portable email paging device. Other contemplated variations include devices which are not necessarily portable, such as desktop computers.

Referring to Figure 1, device 50 comprises a chassis 54 that supports a display 58. Display 58 can comprise one or more light emitters such as an array of light emitting diodes (LED), liquid crystals, plasma cells, or organic light emitting diodes (OLED). Other types of light emitters are contemplated. Chassis 54 also supports a keyboard 62. It is to be understood that this specification is not limited to any particular structure, spacing, pitch or shape of keyboard 62, and the depiction in Figure 1 is an example. For example, full or reduced "QWERTY" keyboards are contemplated. Keyboard 62 may also slide-out from chassis so that, when slid-in, it is hidden behind display 58. Other types of keyboards are contemplated. Device 50 also comprises a pointing device 64 which can be implemented as a touch-pad, joystick, trackball, track-wheel, or as a touch sensitive membrane on display 58. Device 50 also comprises a speaker 66 for generating audio output, and a microphone 68 for receiving audio input.

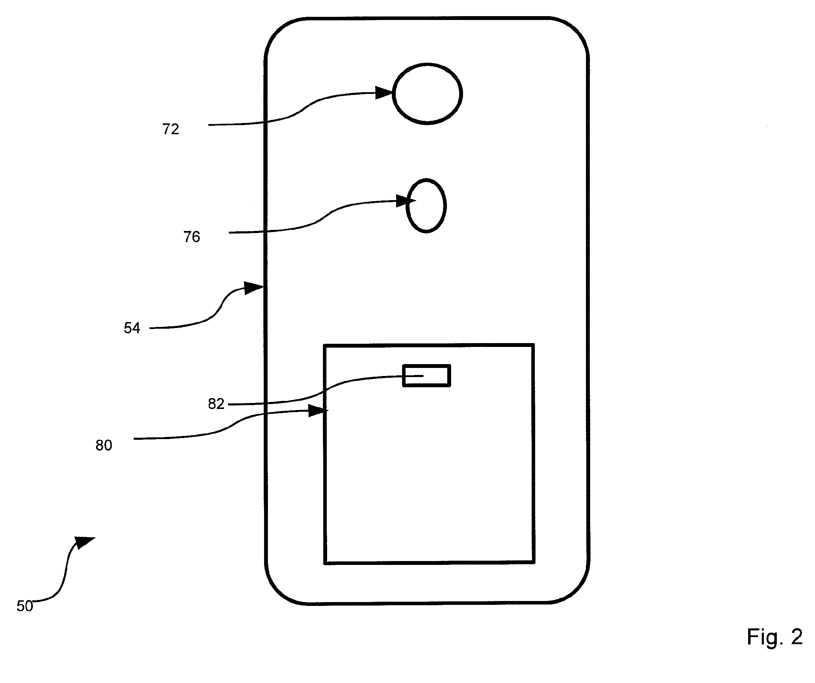

Referring to Figure 2, a rear view of device 50 is shown. In Figure 2, device 50 is also shown as comprising a flash 72 and an optical capture unit 76. It is to be understood that the term "optical" as used in relation to optical capture unit 76 is not directed to a lens structure or the like, but rather to refer to an array of charge couple devices (CCD) (or a functionally equivalent transducer structure) that is configured, in association with a lens structure, to receive an image in the form of electro-magnetic energy substantially within the visible spectrum, and to convert that energy into an electronic signal which can be further processed. Typically, the electronic signal is digitized for storage. The stored digitized image can be further processed and can be generated on display 58. Optical capture unit 76 that will be discussed in greater detail below. Flash 72 can activate to provide additional lighting to assist the capture of energy by optical capture 76. In general, it will now be understood that optical capture unit 76 can, if desired, be implemented, or based on, a digital camera function as commonly incorporated into portable electronic devices.

A battery compartment cover 80 is also shown in Figure 2, with a tab 82 that can be manipulated to unlock cover 80 from chassis 54 and so that cover 80 can be detached from chassis 54.

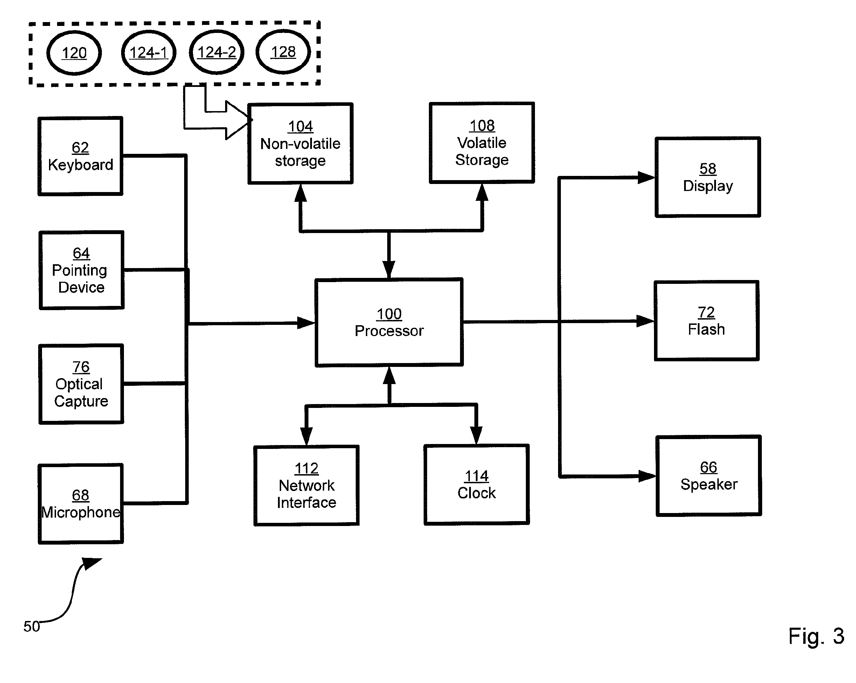

Figure 3 shows a schematic block diagram of the electronic components of device 50. It should be emphasized that the structure in Figure 3 is an example. Device 50 includes a plurality of input devices which in a present embodiment includes keyboard 62, pointing device 64, and microphone 68, in addition to optical capture unit 76. Other input devices are contemplated. Input from keyboard 62, pointing device 64 and microphone 68 and optical capture unit 76 is received at a processor 100. Processor 100 can be configured to execute different programming instructions that can be responsive to the input received via input devices. To fulfill its programming functions, processor 100 is also configured to communicate with a non-volatile storage unit 104 (e.g. Erase Electronic Programmable Read Only Memory ("EEPROM"), Flash Memory) and a volatile storage unit 108 (e.g. random access memory ("RAM")). Programming instructions that implement the functional teachings of device 50 as described herein are typically maintained, persistently, in non-volatile storage unit 104 and used by processor 100 which makes appropriate utilization of volatile storage 108 during the execution of such programming instructions.

Processor 100 in turn is also configured to display 58, control speaker 66 and flash 72, also in accordance with different programming instructions and optionally responsive to different input receive from the input devices.

Processor 100 also connects to a network interface 112, which can be implemented in a present embodiment as a radio configured to communicate over a wireless link, although in variants device 50 can also include a network interface for communicating over a wired link. Network interface 112 can thus be generalized as a further input/output device that can be utilized by processor 100 to fulfill various programming instructions. It will be understood that interface 112 is configured to correspond with the network architecture that defines such a link. Present, commonly employed network architectures for such a link include, but are not limited to, Global System for Mobile communication ("GSM"), General Packet Relay Service ("GPRS"), Enhanced Data Rates for GSM Evolution ("EDGE"), 3G, High Speed Packet Access ("HSPA"), Code Division Multiple Access ("CDMA"), Evolution-Data Optimized ("EVDO"), Institute of Electrical and Electronic Engineers (IEEE) standard 802.11, Bluetooth^{™} or any of their variants or successors. It is also contemplated each network interface 112 can include multiple radios to accommodate the different protocols that may be used to implement different types of links.

Processor 100 also connects to a clock 114, which is configured to receive an initial setting and then chronologically increment in order to maintain a current time, day, month and year.

As will become apparent further below, device 50 can be implemented with different configurations than described, omitting certain input devices or including extra input devices, and likewise omitting certain output devices or including extra output devices.

In a present embodiment, device 54 is also configured to maintain, within non-volatile storage 104, a calendar application 120, a first data record store 124-1 and a second first data record store 124-2. (Collectively, calendar record databases 124, and generically, calendar record database 124). As will be understood from further review of this specification, data record stores 124 each reflect different calendar databases that are accessible by calendar application 120. Further, additional calendar record databases (not shown) are also contemplated. Further, one or more additional applications 128, (each of which may have one or more of its own databases, not shown), may also be included.

Processor 100 configured to execute calendar application 120, making use of first data record store 124-1 and second data record store 124-2 as needed. In one general aspect of this specification, as will be explained further below, processor 100 is configured, using calendar application 120, to automatically select a particular data record store 124 for storage of new records associated with the calendar application. Non-limiting, example implementations of this general aspect will be discussed in further detail below. Before discussing those implementations, however, certain physical medium will be described which can be used as the reference and image.

Referring now to Figure 12, a flowchart depicting a method for record storage in storage database is indicated generally at 500. Method 500 is one way in which a portion of calendar application 120 can be implemented in selecting which data record store 124 to use for a new calendar record. It is also to be emphasized the method 500 can be varied and that method 500 need not be performed in the exact sequence as shown, hence the reference to "blocks" rather than "steps". To assist in discussion of method 500, a specific example to its performance will be discussed in relation to device 50.

Block 505 comprises receiving a calendar record. In the example in relation to device 50, the calendar record is received at processor 100 as part of the execution of a portion of calendar application 120. The means by which the calendar record is received is not particularly limited. As one example, the calendar record can be received as part of an electronic message (e.g. via additional application 128 implemented as an email application, or an instant messaging application, or a social networking application or the like). In this example, the calendar record is in the form of an attachment to, or an embedded datafile within, the electronic message, which is in turn passed to calendar application 120 for further handling. As a second example, the calendar record can be created using a calendar record creation interface within calendar application 120. However received, the calendar record comprises a plurality of data fields. Table I shows an example of the structure of the calendar record that can be received at block 505.

**Table I**

| **Example Calendar Record** | |
|---|---|
| **Field Name** | **Contents** |
| Subject | |
| Location | |
| All Day Event? (Yes/No) | |
| Start Time | |
| Start Day | |
| End Time | |
| Time Zone | |
| Show Time As (Busy/Free/Tentative/Out of Office) | |
| Reminder | |
| Recurrence | |
| Organizer | |
| Invitee(s) | |
| Private (Yes/No) | |
| Notes | |

Explaining Table I in more detail, the "Subject" field contains identifying text that describing the nature of the calendar event. The "Location" field contains identifying text of a prescribed physical location for the calendar event. The "All Day Event?" field is a flag which if set to yes overrides the Start Time and End Time fields, and defaults the actual timing of the event as spanning an entire day. The "Start Time" field becomes available if the "All Day Event?" field is set to "No" and permits the specification of a specific hour and minute of the day (corresponding to the specified "Start Day") as to when the event commences. The "Start Day" field identifies the particular Month, Day and Year when the event commences. The "End Time" field becomes available if the "All Day Event?" field is set to "No" and permits the specification of a specific hour and minute of the day (corresponding to the "End Day") as to when the event ends. The "End Day" field identifies the particular Month, Day and Year when the event ends. The "Show Time As" field permits the setting of a flag that can colour code, or otherwise identify, the availability for any possible concurrently scheduled events. The "Reminder" field can be set to generate an alarm or other notification at a predefined time period prior to the calendar event. The "Recurrence" field can be set to identify a period when the event will repeat, such as daily, weekly, monthly, etc. The "Organizer" field can be set to identify a calendar account which originated the calendar event. The "Invitee(s)" field can be set to identify calendar accounts which have been sent copies of the calendar event. The "Private" field is a flag which if set to "yes" restricts the ability to view the contents of the calendar event record to only the account holder that owns the calendar event record. Such an account holder is usually also the owner and operator of device 50. The "Notes" field is a free text field which can be populated with any text that further describes the nature of the calendar event.

Block 510 comprises parsing the contents of the calendar record received at block 505. In general terms, the parsing comprises identifying individual elements of the calendar record. According to the example of Table I, such parsing is inherently associated with identifying individual fields and then having access to the contents of each of those fields. Where the calendar event record is received as part of an attachment to an email or other electronic message, then block 510 may comprises examining the attachment in order to parse the contents of the attachment into the individual fields and contents that are native to the formatting used by calendar application 120. Where the calendar event record is entered into the interface for calendar application 120, then the parsing at block 510 is effectively inherent.

Block 515 comprises loading a set of selection criteria. The type and nature of the selection criteria is not particularly limited, and in general defines algorithmic operations that when compared to the parsed contents from block 510, can do select which data record store 124 should be automatically selected for storing a particular calendar record. Note that in the specific example discussed above, two data record stores 124 are contemplated. For purposes of continuing the illustrative example discussion, it will be assumed that data record store 124-1 corresponds to a notional "Work Calendar", which is a calendar associated with professional or business activities, whereas data record store 124-2 corresponds to a notional "Personal Calendar", which is a calendar associated with social, home or other any activities that are of a non-professional or non-business nature.

Block 520 comprises comparing the parsed contents from block 510 with the selection criteria loaded at block 515. Block 525 comprises selecting a default record store based on the comparison from block 520.

Various selection criteria are contemplated. Indeed, one class of selection criteria contemplates associating a designated time period with a designated one of the plurality of data record stores. The criteria comprises mandating selection of the designated one of the plurality of data record stores as the default data record store according to a characteristic of the calendar event record. In a more general context, a plurality of different designated time periods can each be individually associated with a plurality of different data record stores.

Within this general class of selection criteria, various different characteristics are contemplated. For example, the characteristic may comprise a time when the receiving electronic data occurs such that if the receiving occurs during the designated time period then the designated one of the plurality of data record stores is selected as the default data record store.

As another example, the characteristic may comprises a duration of time between a start time and an end time of the calendar event record such that if the duration overlaps with the designated time period then the designated one of the plurality of data record stores is selected as the default data record store.

As another example, the characteristic may comprise an indication if the time and an end time of the calendar event record such that if the duration overlaps with the designated time period then the designated one of the plurality of data record stores is selected as the default data record store.

As another example, the characteristic may comprise a predefined text string in the subject field or note field of the calendar event record such that if the predefined text string occurs in the subject field or the note field then the designated one of the plurality of data record stores is selected as the default data record store. The text string may be derived from a previously-stored calendar event record and the designated one of the plurality of data record stores corresponds to the data record store that maintains the previously-stored calendar event record.

As another example, the characteristic may comprise a predefined location associated with the location field of the calendar event record such that if the predefined location occurs in the location field then the designated one of the plurality of data record stores is selected as the default data record store.

As another example, the characteristic may comprise a predefined organizer associated with the organizer field of the calendar event record such that if the predefined organizer exists in the organizer field then the designated one of the plurality of data record stores is selected as the default data record store.

As another example, the characteristic may comprise a predefined invitee associated with the invitee field of the calendar event record such that if the predefined invitee exists in the invitee field then the designated one of the plurality of data record stores is selected as the default data record store.

As another example, the characteristic may comprise a predefined value associated with the private field of the calendar event record such that if the predefined value exists in the private field then the designated one of the plurality of data record stores is selected as the default data record store.

In view of the foregoing, Table II provides some specific examples of non-limiting, and non-exhaustive criteria that can be loaded at block 515, and then used at block 520 and block 525 to elect a default record store.

**Table II**

| **Example Selection Criteria** | | |
|---|---|---|
| **Criteria Number** | **Criteria Name** | **Criteria Description** |
| 1 | Calendar Invitation Received During Designated Office Hours | If a calendar invitation is received during designated office hours, then select Work Calendar; Otherwise Select Personal Calendar. |
| 2 | Subject of the Event matches a previous Event | If a Calendar Event includes text that matches text from a previous calendar event, then select the calendar corresponding to the previous calendar event. |
| 3 | Keywords in Subject or Note cause default to a particular calendar | If the Calendar Event subject includes predefined text then default to calendar associated with that text. |
| 4 | Event Includes Time period Outside of Designated Office Hours | If Time of Day includes a time span that is outside of designated office hours, then select to Personal Calendar; Otherwise select Work Calendar. |
| 5 | Event includes a location outside of identified working premises | If Location identifies the office location as the location of the event, then select Work Calendar; Otherwise select Personal Calendar. |
| 6 | Organizer | If Organizer is identifies an account holder associated with the enterprise, the select work calendar; Otherwise select Personal Calendar. |
| 7 | Invitee(s) | If an invitee is identified that is an account holder associated with the enterprise, the select work calendar; Otherwise select Personal Calendar. |
| 8 | Private (Yes/No) | If field is marked as "yes" then default to Personal Calendar; otherwise select Work Calendar. |
| 9 | Calendar Record is created During Designated Office Hours | If Calendar record is created during designated office hours, then select Work Calendar; otherwise select Personal Calendar. |

Explaining Table II in more detail, various entries therein contemplate the establishment in non-volatile storage 104 of a Designated Office Hours variable,. The Designated Office Hours variable can be set to, for example, the hours of 9:00AM to 5:00PM. Optionally, the Designated Office Hours can also designate a particular time zone. In general, various criteria will have conditions that, depending on a comparison of the current time as stored in Clock 114, and the Designated Office Hours, will result in a "true" or "false" determination.

According to Criteria Number 1, if a calendar invitation is received at block 505 during the Designated Office Hours, then the determination at block 525 is that data record store 124-1 (corresponding to a notional "Work Calendar") is automatically selected. For example, if a calendar event record is received at 10:00AM, then data record store 124-1 is selected. However, if a calendar event record is received at 7:00PM, then data record store 124-2 is selected (corresponding to a notional "Personal Calendar").

According to Criteria Number 2, if all or part of the Subject field of an event received at block 505 matches the Subject field of previous calendar event record, then the default record store will be chosen to match the record store used for the previous calendar event record. For example, if a previous calendar event record comprises the subject "Marketing Meeting" which is associated with data record store 124-1, then a new calendar record received at block 505 with the subject "Marketing Meeting" will likewise be associated with data record store 124-1.

According to Criteria Number 3, if all or part of the Subject field or Notes field of an event received at block 505 matches a predefined text string, then a data record store 124-1 designated as being associated with that predefined text string will be selected. For example, if the text string "Movie" is associated with data record store 124-2, then any calendar event records receive at block 505 will be have data record store 124-2 selected at block 525.

According to Criteria Number 4, if a calendar event record comprises a time of day that is outside of the Designated Office Hours, then the determination at block 525 selects a default record store accordingly. For example, if a calendar event record is assigned a "Start Time" of 6:00PM and an "End Time" of 8:00PM on the same day, data record store 124-2 is automatically selected. As another example, if a calendar event record is assigned a "Start Time" of 6:00PM and an "End Time" of 8:00PM on the same day, data record store 124-2 is automatically selected.

According to Criteria Number 5, if a calendar event record comprises a Location that is outside identified working premises, then the "Personal Calendar" is selected, whereas if the Location is inside identified working premises, then the "Work Calendar" is selected. For example, if a working premises is pre-stored in non-volatile storage as 295 Phillip Street, Waterloo, Ontario, Canada, then a calendar event record with Location that corresponds to this location would be defaulted to data record store 124-1; otherwise the calendar event record would be defaulted to data record store 124-2.

According to Criteria Number 6, if a "Organizer" for a calendar event record received at Block 505 is associated with an enterprise, then data record store 124-1 is selected; otherwise the calendar event record would default to data record store 124-2. This criteria could be implemented by examining the contents of the "Organizer" field and comparing it with a corporate directory to ascertain if those contents match any member of the directory. Such a corporate directory could be external to device 50, or could be local to a contact manager application within device 50.

Criteria Number 7 is a variant on Criteria Number 6, whereby if one or more Invitees for a calendar event record receive at block 505 is associated with an enterprise, then data record store 124-1 is selected, and otherwise data record store 124-2 is selected. A variant on Criteria Number 7 can comprise a threshold determination, whereby a requirement is provided that, for example, more than half of the invitees must be associated with the enterprise directory in order to default to data record store 124-1.

Criteria Number 8 comprises examining the "Private" field, and if a calendar event record from block 505 is flagged as "Private" then it is assumed, for example, that the calendar event record belongs to data record store 124-2, whereas if the calendar event record is public, then the calendar event record belongs to data record store 124-1.

According to Criteria Number 9, if a calendar event record is received at block 505 during Designated Office Hours, then data record store 124-1 is selected, and otherwise data record store 124-2 is selected.

Additional criteria will now occur to those skilled in the art. It is also contemplated that device 50 can be configured so that the various criteria can be dynamically configured and therefore such criteria need not be factory pre-set. By the same token, it is contemplated that device 50 may be configured with only one criteria, be that criteria from Table II or some other criteria. Furthermore, where device 50 is configured with multiple criteria, then a weighting or ranking system may be employed to resolve contradictions. For example, criteria 4 can be set to override a contradiction with criteria 5, so that if criteria 5 suggests a default to data record store 124-1, while criteria 4 suggests a default to data record store 124-2, then criteria 4 will prevail so that data record store 124-2 is ultimately selected at block 525.

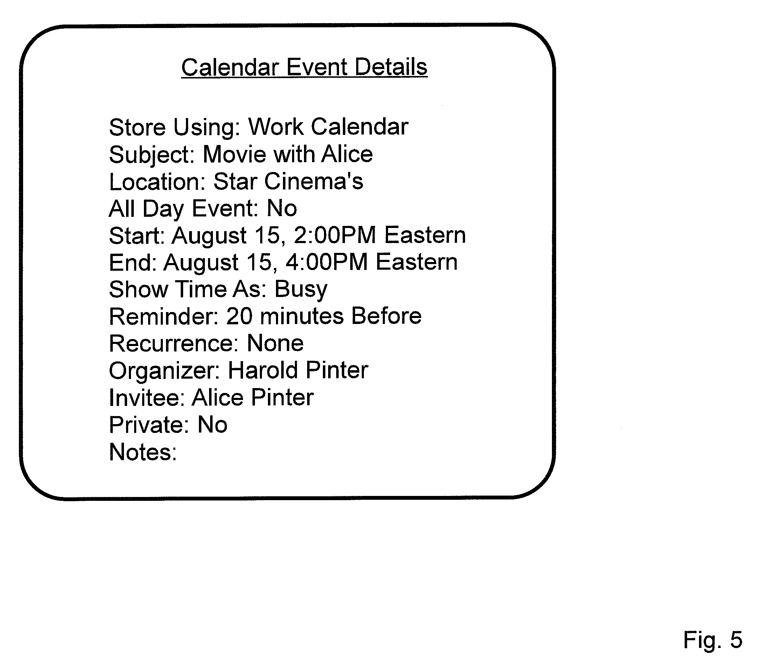

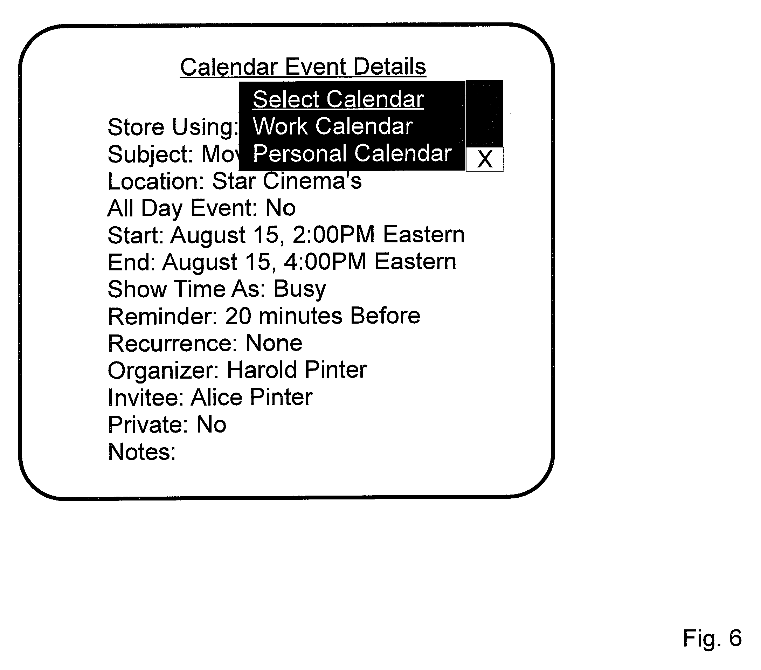

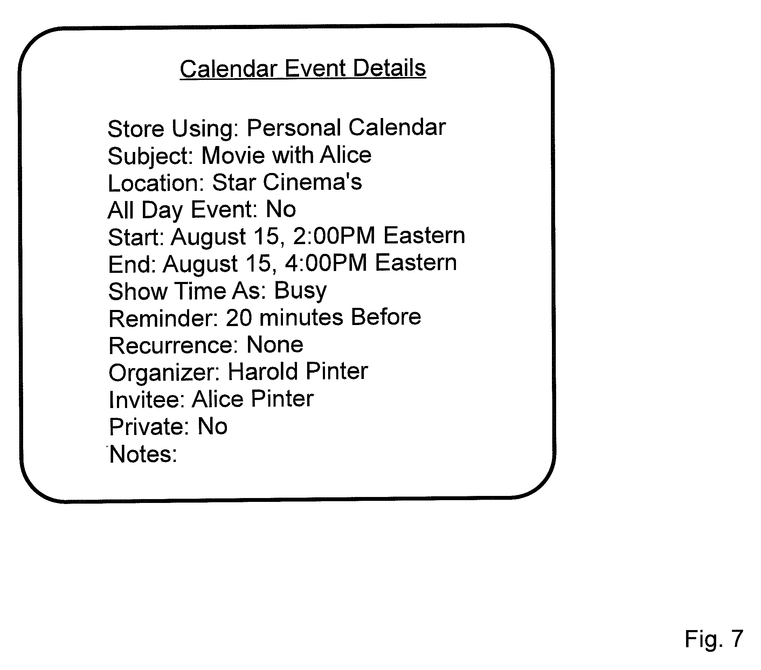

Block 530 comprises a determination as to whether the record store selected at block 525 should be modified. A "yes" determination leads to block 535 at which point the selected data record store can be modified. Block 530 and block 535 can in fact be omitted, but nonetheless can be included to provide an option to change the default setting from block 525. In general, block 530 and block 535 comprise the option of modifying the default data record store to another data record store prior to the storing contemplated at block 540. Example performance of block 530 and block 535 is shown in Figure 5, Figure 6 and Figure 7. Figure 5 shows a received calendar event record that has been defaulted to data record store 124-1, designated as the work calendar. Such a default can have occurred due to, for example, the satisfying criteria 4 whereby the calendar event record has a time period that is within Designated Office Hours. As a result, the graphic interface in Figure 6 can be invoked to permit selection of the Personal Calendar, leading the view in Figure 7 whereby the Personal Calendar (corresponding to data record store 124-2) is now selected as associated with the calendar event record.

While the foregoing provides certain non-limiting example embodiments, it should be understood that combinations, subsets, and variations of the foregoing are contemplated. The monopoly sought is defined by the claims.

## Claims

1. A method for record storage in an automatically selected database comprising:
receiving electronic data representing details for a calendar event record;
parsing said calendar event record;
loading a database selection criteria;
comparing said parsed calendar event record with said database selection criteria;
selecting a default data record store based on said comparing; and,
storing said electronic data is said selected default data record store.

2. The method of claim 1 further comprising modifying said default data record store to another data record store prior to said storing, and storing said electronic data in said another data record store.

3. The method of claim 1 further comprising associating a designated time period with a designated one of said plurality of data record stores and wherein said criteria comprises mandating selection of said designated one of said plurality of data record stores as said default data record store according to a characteristic of said calendar event record.

4. The method of claim 3 wherein said characteristic comprises a time when said receiving electronic data occurs such that if said receiving occurs during said designated time period then said designated one of said plurality of data record stores is selected as said default data record store.

5. The method of claim 3 or claim 4 wherein said characteristic comprises a duration of time between a start time and an end time of said calendar event record such that if said duration overlaps with said designated time period then said designated one of said plurality of data record stores is selected as said default data record store.

6. The method of any one of claims 3-5 wherein said characteristic comprises an indication if said time and an end time of said calendar event record such that if said duration overlaps with said designated time period then said designated one of said plurality of data record stores is selected as said default data record store.

7. The method of any one of claims 3-6 wherein said characteristic comprises a predefined text string in the subject field or note field of said calendar event record such that if said predefined text string occurs in said subject field or said note field then said designated one of said plurality of data record stores is selected as said default data record store.

8. The method of claim 7 wherein said text string is derived from a previously-stored calendar event record and said designated one of said plurality of data record stores corresponds to the data record store that maintains said previously-stored calendar event record.

9. The method of any one of claims 3-8 wherein said characteristic comprises a predefined location associated with the location field of said calendar event record such that if said predefined location occurs in said location field then said designated one of said plurality of data record stores is selected as said default data record store.

10. The method of any one of claims 3-9 wherein said characteristic comprises a predefined organizer associated with the organizer field of said calendar event record such that if said predefined organizer exists in said organizer field then said designated one of said plurality of data record stores is selected as said default data record store.

11. The method of any one of claims 3-10 wherein said characteristic comprises a predefined invitee associated with the invitee field of said calendar event record such that if said predefined invitee exists in said invitee field then said designated one of said plurality of data record stores is selected as said default data record store.

12. The method of any one of claims 3-11 wherein said characteristic comprises a predefined value associated with the private field of said calendar event record such that if said predefined value exists in said private field then said designated one of said plurality of data record stores is selected as said default data record store.

13. A computer readable medium for storing a plurality of programming instructions executable on a processor in a mobile computing device; said programming instructions implementing a method according to any one of claims 1-12.

14. An electronic device configured according to the method of any one of claims 1-12.

## Amended claims

### Amended claims in accordance with Rule 137(2) EPC.

**1.** A method for record storage in an automatically selected database (124) comprising:
receiving (505) electronic data representing details for a calendar event record;
parsing (510) said calendar event record;
loading (515) a database selection criteria;
associating (520) a designated time period with a designated one of a plurality of data record stores;
selecting (525) a default data record store based on comparing said parsed calendar event record with said database selection criteria, said criteria comprising mandating selection of said designated one of the plurality or data record stores as said default data record store according to a characteristic of said calendar event record; and,
storing (540) said electronic data in said selected default data record store,
wherein said characteristic comprises a predefined text string in the subject field or note field of said calendar event record such that if said predefined text string occurs in said subject field or said note field then said designated one of said plurality of data record stores is selected as said default data record store.

**2.** The method of claim 1 further comprising modifying (535) said default data record store to another data record store prior to said storing, and storing said electronic data in said another data record store.

**3.** The method of claim 2 wherein said characteristic comprises a time when said receiving electronic data occurs such that if said receiving occurs during said designated time period then said designated one of said plurality of data record stores is selected as said default data record store.

**4.** The method of claim 2 or claim 3 wherein said characteristic comprises a duration of time between a start time and an end time of said calendar event record such that if said duration overlaps with said designated time period then said designated one of said plurality of data record stores is selected as said default data record store.

**5.** The method of any one of claims 3-4 wherein said characteristic comprises an indication if said time and an end time of said calendar event record such that if said duration overlaps with said designated time period then said designated one of said plurality of data record stores is selected as said default data record store.

**6.** The method of any one of claims 1-5 wherein said text string is derived from a previously-stored calendar event record and said designated one of said plurality of data record stores corresponds to the data record store that maintains said previously-stored calendar event record.

**7.** The method of any one of claims 1-6 wherein said characteristic comprises a predefined location associated with the location field of said calendar event record such that if said predefined location occurs in said location field then said designated one of said plurality of data record stores is selected as said default data record store.

**8.** The method of any one of claims 1-7 wherein said characteristic comprises a predefined organizer associated with the organizer field of said calendar event record such that if said predefined organizer exists in said organizer field then said designated one of said plurality of data record stores is selected as said default data record store.

**9.** The method of any one of claims 1-8 wherein said characteristic comprises a predefined invitee associated with the invitee field of said calendar event record such that if said predefined invitee exists in said invitee field then said designated one of said plurality of data record stores is selected as said default data record store,

**10.** The method of any one of claims 1-9 wherein said characteristic comprises a predefined value associated with the private field of said calendar event record such that if said predefined value exists in said private field then said designated one of said plurality of data record stores is selected as said default data record store.

**11.** A computer readable medium for storing a plurality of programming instructions executable on a processor in a mobile computing device; said programming instructions implementing a method according to any one of claims 1-10.

**12.** An electronic device configured according to the method of any one of claims 1-11.
